# EUROPÄISCHE PATENTANMELDUNG

(11) **EP 0 582 745 A1**
(43) Veröffentlichungstag der Anmeldung: **16.02.1994**
(21) Anmeldenummer: 92115922.4
(22) Anmeldetag: 17.09.1992
(51) Int. Cl.: G02B 6/44

(54) **Verkabelungs- und Installationssystem für mit Lichtwellenleitern bestückte Anlagen**

(30) Priorität: 09.08.1992 DE 4226366
(71) Anmelder: SUHNER ELEKTRONIK GmbH, D-82024 Taufkirchen (DE); OSI KOMMUNIKATIONS- UND SYSTEMTECHNIK GmbH, D-89335 Ichenhausen (DE)
(72) Erfinder: Spring, Karl-Heinz, W-8871 Gundremmingen (DE); Nar, Reinhold, W-8900 Augsburg 21 (DE); Wiesmüller, Bernhard, W-8351 Offenberg (DE)
(74) Vertreter: Schön, Theodor, Patent- und Zivilingenieur

(57) **Zusammenfassung**

Vorgestellt wird ein Verkabelungs-und Installationssystem für mit Lichtwellenleitern bestückte Anlagen, deren Verteiler- und Verbindungsstellen räulich voneinander getrennt, insbesondere in verschiedenen Räumen eines Gebäudes aufgestellt sind und aus jeweils eine Anzahl von einzelne Anschlußgehäuse aufnehmenden Schränken oder Gestellen bestehen, wobei in jedes der Anschlußgehäuse jeweils ein zu einem Kabel zusammengefasstes Lichtwellenleiterbündel mündet und die einzelnen Lichtwellenleiter des Bündels innerhalb des Anschlußgehäuses aufgeteilt und mit an einer Frontplatte des Anschlußgehäuses angeordneten Anschlußadaptern oder dergl. Verbindungselementen verbunden sind, und bei dem eine vorgegebene Länge eines Lichtwellenleiterkabels werksseitig beidendig mit Anschlußgehäusen oder Verbindungseinrichtungen versehen und samt diesen in installationsgerechter Anordnung auf einem Transport-und Montageträger angeordnet ist.

## Beschreibung

Die Erfindung bezieht sich auf Verkabelungs-und Installationssystem für mit Lichtwellenleitern bestückte Anlagen, deren Verteiler- und Verbindungsstellen räulich voneinander getrennt, insbesondere in verschiedenen Räumen eines Gebäudes aufgestellt sind und aus jeweils eine Anzahl von einzelne Anschlußgehäuse aufnehmenden Schränken oder Gestellen bestehen, wobei in jedes der Anschlußgehäuse jeweils ein zu einem Kabel zusammengefasstes Lichtwellenleiterbündel mündet und die einzelnen Lichtwellenleiter des Bündels innerhalb des Anschlußgehäuses aufgeteilt und mit an einer Frontplatte des Anschlußgehäuses angeordneten Anschlußadaptern oder dergl. Verbindungselemente verbunden sind.

Im Rahmen der Aufstellung moderner Datenverarbeitungssysteme ist es erforderlich einzelne Baugruppen des Gesamtsystemes, wie Zentrale und Nebenstellen, in verschiedenen Räumlichkeiten, z.B. eines Gebäudes, aufzustellen und untereinander vermittels entsprechneder Leitungen zu verbinden, was gleichermaßen für die bekannten elektronisch arbeitenden und daher vermittels elektrisch leitender Metallleitungen als auch für an sich gleichfalls bekannten mit Lichtwellen arbeitenden und demzufolge mittels Lichtwellenleiter miteinander zu verbindende Anlagen gilt.
Bei der Installation von mit Lichtwellen arbeitenden Datenverarbeitungssystemen ergeben sich aus den materialcharakteristischen Eigenschaften der üblicherweise aus Glasfasern bestehenden Lichtwellenleiter eine Reihe von Sonderproblemen, die im wesentlichen auf der vergleichsweise geringen Zugfestigkeit von Glasfasern und in Verbindung damit auch auf der hohen Knickempfindlichkeit von Glasfasern sowie der extremen Beeinflußung von Verbindungen von Lichtwellenleitern durch Umwelteinflüsse sowie den Besonderheiten der für die Glasfasern der Lichtwellenleiter anzuwendenden Arbeitsweise z.B. beim Verbin-den der Glasfaser mit einem Kupplungsteil, z.B. einem Steckerteil, beruhen. Hinzu kommt noch die stark unterschiedliche Wärmedehnung zwischen Kunststoffen und Glasfasern, welche in Anbetracht der Bruchgefährlichkeit von Glasfasern besondere, bei Metallleitern nicht erforderliche, besondere Anordnungen vorraussetzt.

In der bekannten und herkömmlichen Weise des Anschlußes von Lichtwellenleitern an Verteilereinrichtungen bzw. Verteilerschränke bzw. an in diese einsetzbare Anschlußgehäuse für ankommende und abgehende Lichtwellenleiter werden die einzelnen in Form des Kabels gruppenweise in das Anschlußgehäuse eingeführten Lichtwellenleiter jeweils vor Ort über einen dem Ausgleich der Wärmedehnung dienenden Längenspeicher geführt und einzeln mit den jeweils zugehörigen Verbindungselementen verbunden, wozu es erforderlich ist jeden einzelnen der Lichtwellenleiter mindestens im Anschlußbereich einzeln von seiner Umhüllung zu befreien und unter Anwendung der hierfür bekannten Techniken mit dem zugehörigen Verbindngselement zu koppeln, woraus ein erheblich Zeit- und Arbeitsaufwasnd des Monteurs vor Ort resultiert und woraus ferner erhebliche Probleme hinsichtlich der Sicherung der gesamten Datenverarbeitungsanlage gegen möglichen Mißbrauch resultieren, so daß nicht nur die Installation an sich, sondern zusätzlich auch noch die Sicherheitsüberwachung einen erheblichen Aufwand bedingen.

Der Erfindung liegt daher die Aufgabe zugrunde ein Verkabelungs- und/oder Installationssystem aufzuzeigen, bei dem die vorgenannten Probleme bzw. Unzulänlichkeiten der bekannten Verkabelungs- und/oder Installationsweisen vermieden sind und welches sich vor allem dadurch auszeichnet, daß vor Ort überhaupt keine Montagearbeiten mehr vorzunehmen sind.

Diese Aufgabe wird erfindungsgemäß im Wesentlichen dadurch gelöst, daß eine vorgegebene Länge eines Lichtwellenleiterkabels werksseitig beidendig mit Anschlußgehäusen oder Verbindungseinrichtungen versehen und samt diesen in installationsgerechter Anordnung auf einem Transport-und Montageträger angeordnet ist. Dabei kann erfindungsgemäß vorgesehen sein, daß die vorgegebene Länge des Lichtwellenleiterkabels jeweils nur der im Einzelfall ungefähr erforderlichen Mindestlänge und daher jeweils, für eine Anzahl von Verkabelungen gleichermaßen passenden Kabellänge entspricht, was es erlaubt bei entsprechend kleinbauender Ausbildung der Anschlußgehäuse innerhab des jeweils zugehörigen Schrankes eine gewisse überlänge des Kabels unterzubringen, in der Weise, daß ausgehend von einer Normgröße des Schrankes ohne jedes Problem überschüssige Kabellängen im Schrank untergebracht werden können. Eine kleinbauende Ausbildung der Anschlußgehäuse ergibt hinsichtlich der Verwirklichung bzw. Handhabung des erfindungsgemäßen Verkabelungs-oder Installationssystemes besondere Vorteile, dahingehend, daß unlösbar mit dem Kabel verbundene vormontierte Anschlußgehäuse problemlos auch durch kleine, mittels eines rotierend arbeitenden Bohr-oder Schneidwerkzeuges erstellte Wandungsdurchbrüche eine Gebäudes hindurchgeführt werden können, wodurch nicht zuletzt auch die tatsächliche Verwendbarkeit des erfindungsgemäßen Verkabelungs- bzw. Installationssystemes dahingehend optimiert wird, daß zum einen innerhalb des Gebäudes Durchbrüche verhältnismäßig geringen Durchmessers und mittels rotierend arbeitender Werkzeuge rasch und ohne nennswerte Beschädigung der Wandungen erstellbare Durchbrüche ausreichen und daß zum anderen keinerlei Montagearbeiten vor Ort mehr vorzunehmen sind.

Hand in Hand mit dieser installationsgerechten Ausbildung der wesentlichsten Komponenten des Verkabelungssystemes besteht ein besonderer weiterer Vorteil des erfindungsgemäßen Systemes ferner darin, daß mindestens das in Installationsrichtung vorne liegende Anschlußgehäuse absolut zugfest mit der Kabellänge verbunden ist und daß die vorgegebene Kabellänge auf einem Transport- und Montageträger aufgenommen und somit zunächst in seiner Gesamtheit transportierbar und ferner auch auch ausgehend von einer gegebenen Ausgangslage problemlos innerhalb des Gebäudes verlegbar ist.

Im Einzelnen ist nach einer bevorzugten Ausführungsform der Erfindung insbesondere vorgesehen, der Transport- und Montageträger eine Kabeltrommel für die Kabellänge und zusätzlich zu dieser angeordnete Aufnahmen bzw. Halterungen für die mit der Kabellänge verbundenen Anschlußgehäuse oder dergl. Verbindungselemente aufweist, wobei beispielsweise vorgesehen sein kann, daß an die eine Seitenwandung des Kabeltrommelabschnittes des Transport- und Montageträgers vermittels wenigstens eines Abstandshalters eine zu dieser deckungsgleiche und mit einem Abstand zu dieser angeordnete Schutzplatte angeschlossen ist, welche eine zur Achse des Kabeltrommelabschnittes koaxiale Lochausnehmung aufweist, und wobei der Abstandshalter zwischen Seitenwandung des Kabeltrommelabschnittes und Schutzplatte beispielsweise durch eine Anzahl in Umfangsrichtung gleichmäßig verteilt angeordneter Stehbolzen gebildet ist.

Im Interesse einer einheitlichen Ausbildung des Transport- und Montageträgers auch für verschiedene Kabellängen und Anschlußgehäuse bzw. Verbindungselementeausbildungen ist die der Schutzplatte zugewandte Seitenwandung des Kabeltrommelabschnittes mit einer Anzahl radial gerichteter verhältnismäßig weiträumiger Ausnehmungen versehen, über welche die mit den Anschlußgehäusen bzw. Verbindungselementen verbundenen Kabelenden aus dem Trommelbereich herausgeführt sind.

In weiterer Vervollständigung der Mittel zur Erleichterung der Installation kann fernerhin vorgesehen sein, daß das in Anschlußrichtung vorne liegende Anschlußgehäuse bzw. die entsprechende Verbindungseinrichtung bereits werksseitig in einer Einziehverkappung angeordnet und samt dieser an der Seitenwandung des Kabeltrommelabschnittes gehaltert ist, wobei es sowohl an sich als auch in Verbindung mit der vorgenannten Maßnahme vorteilhaft ist, daß wenigstens das in Installationsrichtung vorne liegende Anschlußgehäuse bzw. die Verbindungseinrichtung möglichst kleinbauend ausgeführt ist und eine dem Querschnitt eines mittels eines Bohrers oder dergl. rotierenden Werkzeuges erstellbaren Durchgangsquerschnittes wenigstens annähernd angepasste Querschnittsform aufweist. Von der an hierzu an sich optimalen teilkreisförmigen Querschnittsform weicht die praktisch zu verwirklichende Querschnittsform hierbei zweckmäßigerweise in Richtung auf eine trapezförmige Querschnittsform ab, um entsprechende Anlage-und Halterungsflächen für den Einbau in Schränke oder Regale aubilden zu können. Im Interesse einer möglichst weitgehenden Produktions- und Verwendungseinheitlichkeit sollten die beiden mit der Kabellänge verbundenen Anschlußgehäuse bzw. Verbindungeinrichtungen untereinander austauschbar gleichförmig ausgebildet sein

Ein für die Realisierung des der Erfindung zugrundeliegenden Gedankens wesentliches Merkmal ist ferner darin zu sehen, daß die Kabellänge mit dem in Installationsrichtung vorne liegenden Anschlußgehäuse oder Verbindungseinrichtung zugfest verbunden ist, wobei eine solche zugfeste Verbindung vorschlagsweise darin bestehen kann, daß die zugfeste Verbindung zwischen dem in Installationsrichtung vorne liegenden Anschlußgehäuse oder Verbindungseinrichtung vermittels einer mit dem Anschlußgehäuse bzw. der Verbindungseinrichtung direkt oder unter Zwischenschaltung eines weiteren Bauteiles des Anschlußgehäuses bzw. der Verbindungseinrichtung erstellten Verbindung mit dem zugfesten Teil des Kabelmantels, insbesondere dem sog. Keflar, des Kabels gebildet ist. Insbesondere kann in diesem Zusammenhang vorgesehen sein, daß die zugfeste Verbindung zwischen Kabel und Anschlußgehäuse bzw. Verbindungseinrichtung durch eine an diesem zugfest abgestützte Vorrichtung zur Aufteilung der einzelnen Lichtwellenleiter des Kabels gebildet wird, wobei der zugfeste Teil des Kabelmantels, insbesondere das sog. Keflar, zum einen zusammen mit dem Kabelmantel insgesamt in einer Spann- und zum anderen für sich alleine in einer Klemmeinrichtung des weiteren , vorzugsweise durch einen sog. Aufteiler gebildeten Vorrichtung eingespasnnt ist.

In einer vorteilhaften Einzelausgestaltung kann dann schließlich noch vorgesehen sein, daß die in einen genormten Schrank oder dergl. einsetzbaren Anschlußgehäuse an ihren beiden Stirnenden jeweils mit einem Anschluß-oder Befestigungswinkel versehen sind, welcher mit dem Anschlußgehäuse jeweils lösbar, insbesondere vermittels Schraubenbolzen verbunden ist und vornehmlich der Erleichterung des Ein- und insbesondere des Ausbaues des Anschlußgehäuses aus dem Schrank dient. Eine dem gleichen Zweck dienende und besonders vorteilhafte Ausbildung kann ferner auch darin bestehen, daß für die Festlegung der Anschlußgehäuse in einem Schrank oder Regal in ihrer montierten Lage zur Frontplatte des Anschlußgehäuses fluchtend ausgerichtete Plattenelemente dienen, wobei dessen Frontplatte eine gegenüber der Länge seiner offenen Länge geringere Länge aufweist und die Plattenelemente sowohl mit dem Gehäusekörper als auch mit dem Schrank bzw. Regal mittels Schraubverindung lösbar verbunden sind.

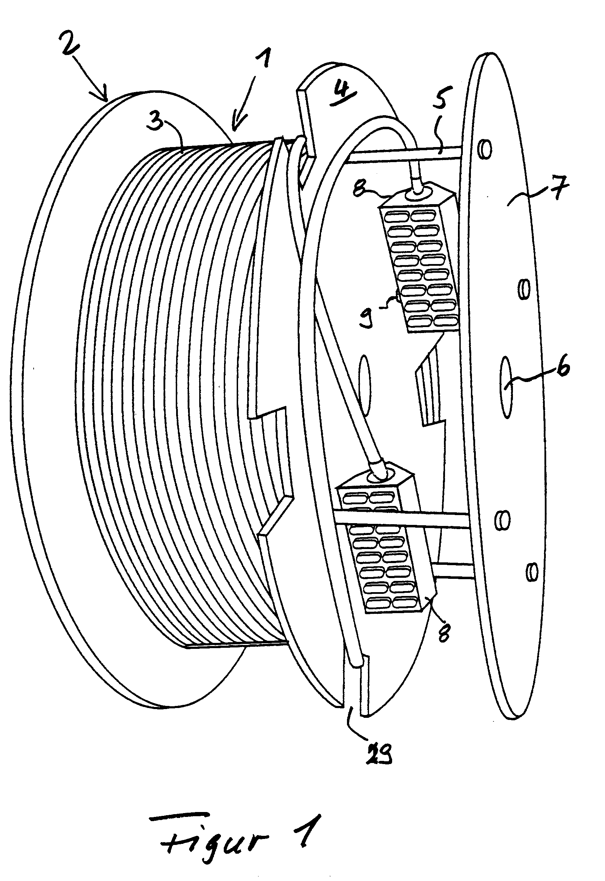

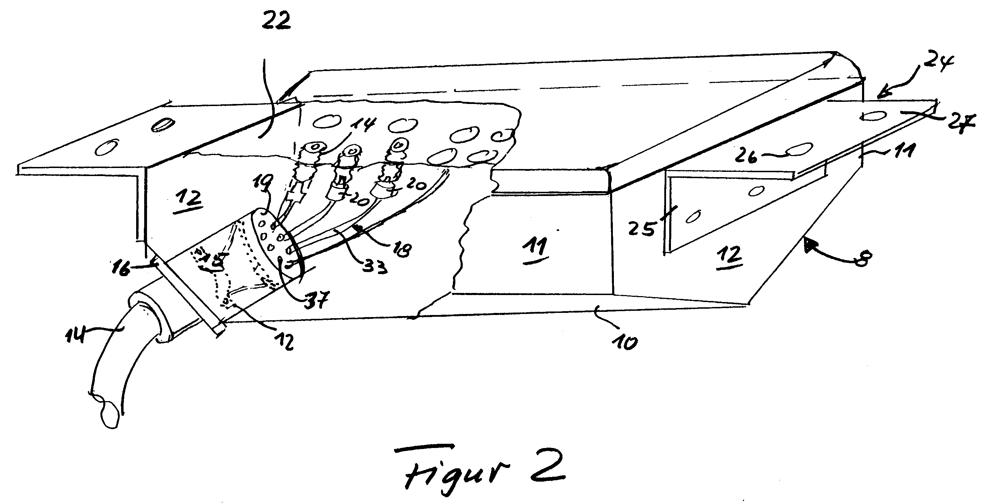

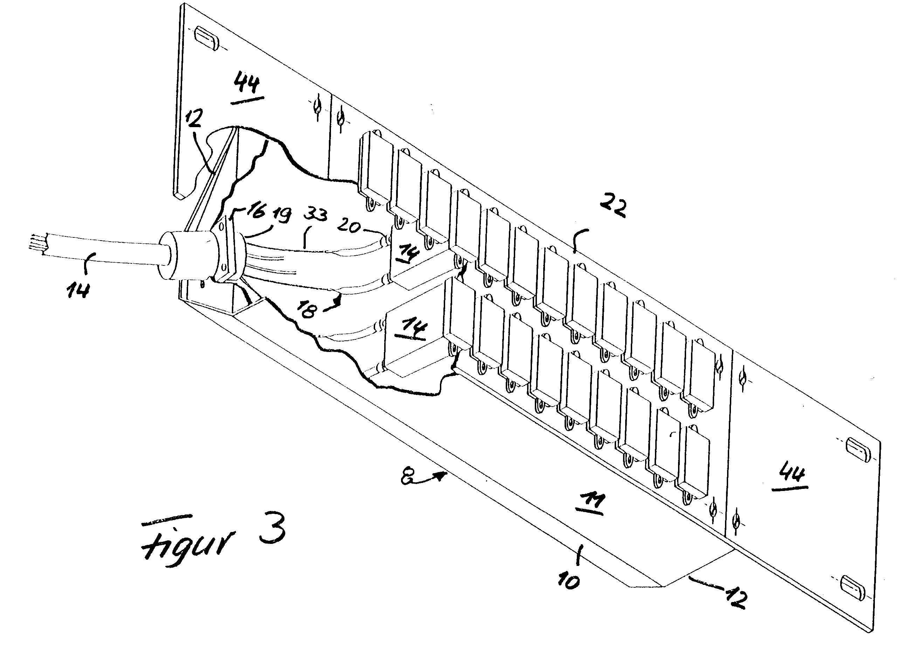

Die Erfindung ist in der nachfolgenden Beispielsbeschreibung anhand eines in der Zeichnung dargestellten Ausführungsbeispieles im Einzelnen beschrieben. In der Zeichnung zeigt die
- Figur 1: eine schaubildliche Darstellung eines mit einer Installationseinheit bestückten Transport-und Montageträgers;
- Figur 2: eine schaubildliche Darstellung eines Ausführungsbeispieles für ein Anschlußgehäuse samt zugentlastender Verbindung mit der auf dem Transport- und Montageträger gespeicherten Kabellänge;
- Figur 3: eine schaubildliche Darstellung einer weiteren Ausführungsform eines Anschlußgehäuses samt zugentlastender Verbindung mit der auf dem Transport- und Montageträger gespeicherten Kabellänge
Auf einem einen Trommelabschnitt 1 aufweisenden Transport und Montageträger 2 ist eine vorgegebene Länge eines Lichtellenleiter-Kabels 3 aufgewickelt. An die eine Seitenwandung 4 des Trommelabschnittes 1 des Transport-und Montageträgers 2 ist vermittels Abstandshalter bildender Stehbolzen 5 eine zu dieser deckungsgleiche und mit einer zu dessen Achse koaxialen zentralen Lochausnehmung 6 versehene Schutzplate 7 angeschlossen, unterhalb derer mit den Enden der Kabellänge 3 verbundene Anschlußgehäuse 8 abgelegt sind. Die Anschlußgehäuse 8 sind dabei im gezeigten Ausführungsbeispiel mit Hilfe von Halterungen 9 an der Seitenwandung 4 des Trommelabschnittes 1 lösbar, insbesondere klemmend festgelegt. Zur möglichst flachwinkeligen Herausführung der mit den Anschlußgehäusen 8 versehenen Enden der auf dem Trommelabschnitt 1 gespeicherten Kabellänge 3 sind in der Seitenwandung 4 des Trommelabschnittes 1 radial gerichtete verhältnismäßig weiträumige Einschnitte 29 angeordnet. Die beiden Anschlußgehäuse 8 sind untereinander gleichförmig ausgebildet und weisen jeweils eine etwa trapezartige Querschnittsform auf. Die Anschlußgehäuse bestehen aus einem deren Boden 10 und deren Seiten-11 und Stirnwandungen 12 umfassenden Gehäusekörper und einer Frontplatte 22, wobei die der Einführung des Kabelendes 14 zugeordnete Stirnwandung 12 des Gehäusekörpers schräg zum Gehäuseinneren hin abfallend geneigt ist. Eine Zugentlastung der Verbindung zwischen den einzelnen Lichtwellenleitern 33 und den jeweils zugeordneten, im gezeigten Ausführungsbeispiel als Duplex-Adapter 14 ausgebildeten Leitungsverbindungen wird dabei dadurch erreicht, daß ein als zusammensetzbares Formteil ausgebildeter Aufteiler 15 über einen radialen Flansch 16 an dem bezüglich des Anschlußgehäuses 8 nach innen abfallenden Stirnwandungsteil 12 zugfest abgestützt ist und daß ferner zunächst der Mantel des Lichtwellenleiterkabels 3 vermittels einer Klemmeinrichtung 17 am Aufteiler 15 festgelegt ist und daß ferner zusätzlich die zugfeste Armierung des Lichtwellenleiterkabels 3 in einer Eingriffsverbindung zwischen einer mit Durchgangsöffnungen 37 für die einzelnen Lichtwellenleiter 33 bzw. deren Ummantelungen 18 versehenen Abschlußplatte 19 festgelegt ist.
Aus der Darstellung insbesondere der Figur 2 ist darüberhinaus noch erkennbar, daß die einzelnen Lichtwellenleiter 33 mit Anschlußsteckern 20 verbunden sind, die in an einer Frontplatte 22 des Anschlußgehäuses 8 mittels Verschraubung feststehend angeordneten Duplex-Durchführungskupplungen 14 einsteckbar sind. An die Anschlußgehäuse 8 sind ferner lösbar Befestigung Winkel 24 angeschlossen, welche mit ihrem einen Winkelschenkel 25 an jeweils einer der Stirnseiten 12 des Anschlußgehäuses 8 anliegen und mit ihrem anderen, mit Bohrungen 26 für Befestigungsschrauben versehenen Winkelschenkel 27 mit dem Schrank oder Regal verbindbar sind und Montagehilfen fürt die Anordnung der Anschlußgehäuse 8 im Schrank oder Regal bilden, derart, daß auch das Montieren und insbesondere das Lösen einzelner in Reihe nebeneinanderliegend im Schrank angeordneter Anschlußgehäuse 8 vereinfacht ist.
Eine dem gleichen Zweck, wie die Winkel 24 nach Figur 2 dienende und besonders vorteilhafte Ausbildung ist in der Figur 3 dargestellt und sieht vor, daß für die Festlegung der Anschlußgehäuse in einem Schrank oder Regal in ihrer montierten Lage zur Frontplatte des Anschlußgehäuses fluchtend ausgerichtete Plattenelemente 44 dienen, wobei dessen Frontplatte 22 eine gegenüber der Länge seiner offenen Länge geringere Länge aufweist und die Plattenelemente 44 sowohl mit dem Gehäusekörper des Anschlußgehäuses 8 als auch mit dem Schrank bzw. Regal mittels Schraubverindung lösbar verbunden sind.

## Patentansprüche

1. Verkabelungs-und Installationssystem für mit Lichtwellenleitern bestückte Anlagen, deren Verteiler- und Verbindungsstellen räulich voneinander getrennt, insbesondere in verschiedenen Räumen eines Gebäudes aufgestellt sind und aus jeweils eine Anzahl von einzelne Anschlußgehäuse aufnehmenden Schränken oder Gestellen bestehen, wobei in jedes der Anschlußgehäuse jeweils ein zu einem Kabel zusammengefasstes Lichtwellenleiterbündel mündet und die einzelnen Lichtwellenleiter des Bündels innerhalb des Anschlußgehäuses aufgeteilt und mit an einer Frontplatte des Anschlußgehäuses angeordneten Anschlußadaptern oder dergl. Verbindungselemente verbunden sind, dadurch gekennzeichnet, daß eine vorgegebene Länge eines Lichtwellenleiterkabels (3) werksseitig beidendig mit Anschlußgehäusen (8) oder Verbindungseinrichtungen versehen und samt diesen in installationsgerechter Anordnung auf einem Transport-und Montageträger (2) angeordnet ist.

2. Verkabelungs-und Installationssystem nach Anspruch 1, dadurch gekennzeichnet, daß der Transport- und Montageträger (2) eine Kabeltrommel (1) für die Kabellänge (3) und zusätzlich zu dieser angeordnete Aufnahmen bzw. Halterungen (9) für die mit der Kabellänge (8) verbundenen Anschlußgehäuse (8) oder dergl. Verbindungselemente aufweist.

3. Verkabelungs-und Installationssystem nach Anspruch 1 und 2, dadurch gekennzeichnet, daß an die eine Seitenwandung (4) des Kabeltrommelabschnittes (1) des Transport- und Montageträgers (2) vermittels wenigstens eines Abstandshalters (5) eine zu dieser deckungsgleiche und mit einem Abstand zu dieser angeordnete Schutzplatte (7) angeschlossen ist, welche eine zur Achse des Kabeltrommelabschnittes koaxiale Lochausnehmung aufweist.

4. Verkabelungs-und Installationssystem nach Anspruch 1 bis 3, dadurch gekennzeichnet, daß der Abstandshalter (5) zwischen Seitenwandung des Kabeltrommelabschnittes (1) und Schutzplatte (7) durch eine Anzahl in Umfangsrichtung gleichmäßig verteilt angeordneter Stehbolzen (5) gebildet ist.

5. Verkabelungs-und Installationssystem nach Anspruch 1 bis 4, dadurch gekennzeichnet, daß die Seitenwandung (4) des Kabeltrommelabschnittes (1) mit einer Anzahl radial gerichteter Ausnehmungen (29) versehen ist.

6. Verkabelungs-und Installationssystem nach Anspruch 1 bis 5, dadurch gekennzeichnet, daß an der Seitenwandung (4) des Kabeltrommelabschnittes (1) Halterungen (9) oder Aufnahmen für die Anschlußgehäuse (8) oder Verbindungseinrichtungen angeodnet sind.

7. Verkabelungs-und Installationssystem nach Anspruch 1 bis 6, dadurch gekennzeichnet, daß das in Anschlußrichtung vorne liegende Anschlußgehäuse (8) bzw. die entsprechende Verbindungseinrichtung bereits werksseitig in einer Einziehverkappung angeordnet und samt dieser an der Seitenwandung (4) des Kabeltrommelabschnittes (1) gehaltert ist.

8. Verkabelungs-und Installationssystem nach Anspruch 1 bis 7, dadurch gekennzeichnet, daß wenigstens das in Installationsrichtung vorne liegende Anschlußgehäuse (8) bzw. die Verbindungseinrichtung eine dem Querschnitt eines mittels eines Bohrers oder dergl. rotierendem Werkzeug erstellbaren Durchgangsquerschnitt wenigstens annähernd angepasste Querschnittsform aufweist.

9. Verkabelungs-und Installationssystem nach Anspruch 1 bis 8, dadurch gekennzeichnet, daß die beiden mit der Kabellänge (3) verbundenen Anschlußgehäuse (8) bzw. Verbindungeinrichtungen untereinander austauschbar gleichförmig ausgebildet sind.

10. Verkabelungs-und Installationssystem nach Anspruch 1 bis 9, dadurch gekennzeichnet, daß die Kabellänge (3) mit dem in Installationsrichtung vorne liegenden Anschlußgehäuse (8) oder Verbindungseinrichtung zugfest verbunden ist.

11. Verkabelungs-und Installationssystem nach Anspruch 1 bis 10, dadurch gekennzeichnet, daß die zugfeste Verbindung zwischen dem in Installationsrichtung vorne liegenden Anschlußgehäuse (8) oder Verbindungseinrichtung vermittels einer mit dem Anschlußgehäuse (8) bzw. der Verbindungseinrichtung direkt oder unter Zwischenschaltung eines weiteren Bauteiles des Anschlußgehäuses (8) bzw. der Verbindungseinrichtung erstellten Verbindung mit dem zugfesten Teil des Kabelmantels, insbesondere dem sog. Keflar, des Kabels gebildet ist.

12. Verkabelungs-und Installationssystem nach Anspruch 1 bis 11, dadurch gekennzeichnet, daß die zugfeste Verbindung zwischen Kabel und Anschlußgehäuse bzw. Verbindungseinrichtung durch eine an diesem zugfest abgestützte Vorrichtung zur Aufteilung der einzelnen Lichtwellenleiter des Kabels gebildet wird, wobei der zugfeste Teil des Kabelmantels, insbesondere das sog. Keflar, zum einen zusammen mit dem Kabelmantel insgesamt in einer Spann- und zum anderen für sich alleine in einer Klemmeinrichtung des weiteren , vorzugsweise durch einen sog. Aufteiler gebildeten Vorrichtung eingespasnnt ist.

13. Verkabelungs-und Installationssystem nach Anspruch 1 bis 12, dadurch gekennzeichnet, daß dem Anschlußgehäuse (8) mit diesem insbesondere lösbar verbundene Haltewinkel (24) zugeordnet sind, welche über ihren einen Winkelschenkel (25) an dessen Stirnwandung (12) anliegen und über ihren anderen Winkelschenkel (26) die Befestigung des Anschlußgehäuses (8) mit einem dieses aufnehmenden Schrank oder dergl. bilden.

14. Verkabelungs-und Installationssystem nach Anspruch 1 bis 12, dadurch gekennzeichnet, daß für die Festlegung der Anschlußgehäuse (8) in einem Schrank oder Regal in ihrere montierten Lage zur Frontplatte des Anschlußgehäuses (8) fluchtend ausgerichtete Plattenelemente (44) dienen, wobei dessen Frontplatte eine gegenüber der Länge seiner offenen Länge geringere Länge aufweist und die Plattenelemente (44) sowohl mit dem Gehäusekörper als auch mit dem Schrank bzw. Regal mittels Schraubverindung lösbar verbunden sind.
